# EUROPEAN PATENT APPLICATION

(11) **EP 2 783 810 A2**
(43) Date of publication of application: **01.10.2014**
(21) Application number: 14158332.8
(22) Date of filing: 07.03.2014
(51) Int. Cl.: B25J 9/16

(54) **Robot system and method for producing to-be-processed material**

(30) Priority: 14.03.2013 JP 2013052059
(71) Applicant: Kabushiki Kaisha Yaskawa Denki, Kitakyushu-shi, Fukuoka 806-0004 (JP)
(72) Inventor: Ichimaru, Yuji, Kitakyushu-shi Fukuoka 806-0004 (JP)
(74) Representative: Viering, Jentschura & Partner Patent- und Rechtsanwälte

(57) **Abstract**

A robot system (100) includes a robot (101). The robot (101) includes a holder (10) to hold a first workpiece from among workpieces stored in a stocker (102). A sensor (103) performs shape recognition of the workpieces stored in the stocker (102) and detects a holding state of the first workpiece held by the robot (101). A controller (104) controls the sensor (103) to perform the shape recognition of the workpieces stored in the stocker (102), controls the robot (101) to hold the first workpiece based on the shape recognition and transfer the first workpiece to a particular position in a sensor area of the sensor (103), controls the sensor (103) to detect the holding state of the first workpiece held by the robot (101), and controls the robot (101) to place the first workpiece in a predetermined position or posture based on the detected holding state.

## Description

### BACKGROUND

### FIELD OF THE INVENTION

The present invention relates to a robot system and a method for producing a to-be-processed material.

### DISCUSSION OF THE BACKGROUND

In recent years, various proposals have been made regarding bin picking technology, by which identically shaped workpieces, such as bolts, that are randomly stored (stacked in bulk) in a stocker are taken out of the stocker for handling. This technology includes shape recognition (three-dimensional recognition of position and posture) of the workpieces in the stocker, determination as to which workpiece to hold based on the recognition result, and taking the workpiece out of the stocker.

In some situations of the bin picking, the workpieces overlap in the stocker in such a complicated manner that the to-be-held portion of the workpiece is hidden. For this and other reasons, it may not be possible to suitably hold the workpiece. As a result, the held workpiece may not be forwarded to the next step in a suitable holding state, leaving a possibility of degraded accuracy of workpiece handling work. In view of this, in addition to the use of a shape sensor for shape recognition of the workpieces in the stocker, it is necessary to detect whether the holding state of the held workpiece is suitable. (See Japanese Unexamined Patent Application Publication No. 2011-183537.)

The contents of Japanese Unexamined Patent Application Publication No. 2011-183537 are incorporated herein by reference in their entirety.

Unfortunately, since the above-described conventional technique involves a holding-state detection device to detect the holding state in addition to the shape sensor, it is necessary to transfer the workpiece from the sensor area of the shape sensor to the holding-state detection device. The time necessary for the transfer has inhibited the attempt to shorten the time for workpiece handling work.

The present disclosure has been made in view of the above-described circumstances, and it is an object of the present disclosure to provide a robot system and a method for producing a to-be-processed material that shorten the time for workpiece handling work.

### SUMMARY

According to one aspect of the present disclosure, a robot system 100 includes a robot 101, a sensor 103, and a controller 104. The robot 101 includes a holder 10 configured to hold a first workpiece from among a plurality of workpieces stored in a stocker 102. The sensor 103 is configured to perform shape recognition of the plurality of workpieces stored in the stocker 102 and is configured to detect a holding state of the first workpiece held by the robot 101. The controller 104 is configured to control the sensor 103 to perform the shape recognition of the plurality of workpieces stored in the stocker 102, configured to control the robot 101 to hold the first workpiece based on the shape recognition performed by the sensor 103 and to transfer the first workpiece to a particular position in a sensor area of the sensor 103, configured to control the sensor 103 to detect the holding state of the first workpiece held by the robot 101, and configured to control the robot 101 to place the first workpiece at a predetermined position or in a predetermined posture based on the holding state detected by the sensor 103.

According to another aspect of the present disclosure, a method for producing a to-be-processed material includes obtaining a to-be-processed material using a workpiece obtained using the above-described robot system 100.

The present disclosure ensures a robot system and a method for producing a to-be-processed material that shorten the time for workpiece handling work.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a diagram schematically illustrating a configuration of a robot system according to an embodiment;
FIG. 2 illustrates a state in which a workpiece is handled using the robot system shown in FIG. 1;
FIG. 3 illustrates an image captured under the condition shown in FIG. 2;
FIG. 4 illustrates another image captured under a condition different from the condition shown in FIG. 3;
FIG. 5 illustrates a state in which a workpiece is handled using the robot system shown in FIG. 1 under a condition different from the condition shown in FIG. 2; and
FIG. 6 illustrates an image captured under the condition shown in FIG. 5.

### DESCRIPTION OF THE EMBODIMENTS

The embodiments will now be described with reference to the accompanying drawings, wherein like reference numerals designate corresponding or identical elements throughout the various drawings.

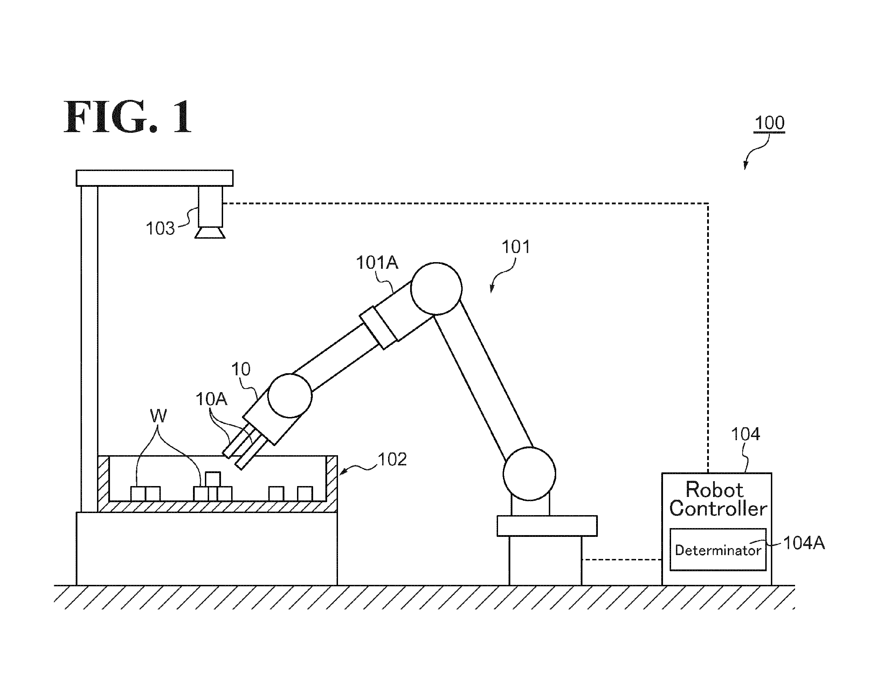

As shown in FIG. 1, a robot system 100 includes a robot 101, a stocker 102, a camera (that is, sensor) 103, and a robot controller (that is, controller) 104. The robot 101 grips (that is, holds) one workpiece W at a time from the stocker 102.

The robot 101 is what is called an articulated robot. The robot 101 includes a base fixed to a fixed surface, and an arm 101A having a plurality of rotary joints from the base to the distal end of the arm 101A. The arm 101A is equipped with built-in servo motors. Each of the servo motors drives a corresponding joint. The joint is driven by the robot controller 104.

The arm 101A of the robot 101 includes a holding device (that is, holder) 10 at the distal end of the arm 101A. The holding device 10 includes a pair of finger members 10A. The pair of finger members 10A are openable and closable by an actuator that expands and diminishes the gap between the pair. The holding device 10 is rotatable by an actuator about an axis oriented along the direction in which the holding device 10 is elongate. The robot controller 104 controls the open-close operation of the finger members 10A and the rotation of the holding device 10.

The stocker 102 is a box made of metal, resin, or other material. In the stocker 102, the plurality of workpieces W are randomly disposed (stacked in bulk). While the workpieces W stacked in bulk in the stocker 102 are cubic in FIG. 1, any other shapes are also possible (examples including a bolt shape, a bar shape, and a spherical shape). In some cases, some tens or hundreds of the workpieces W are put in multiple stacks. In this embodiment, however, only a few workpieces W in one or two stacks are shown for the convenience of description and illustration.

The camera 103 is positioned over the stocker 102 and oriented vertically downward to capture an image of the inside of the stocker 102. The camera 103 is a three dimensional camera capable of capturing images (pixel arrangement data) from above the stocker 102 and acquiring distance information on an image. The height of the camera 103 is adjusted to ensure that all the workpieces W stacked in the stocker 102 are within an image capture area (that is, field angle) R of the camera 103. The camera 103 is fixed at this height position. Similarly to the robot 101, the camera 103 is controlled by the robot controller 104.

The camera 103 includes a built-in camera controller (not shown). The camera controller analyzes the image captured by the camera 103. As described later, the analysis processing of the image includes shape recognition of the workpieces W stored in the stocker 102 and detection of a holding state of a workpiece W1 held by the robot 101.

As described above, the robot controller 104 controls both the robot 101 and the camera 103.

For example, the robot controller 104 controls the robot 101 to transfer the holding device 10, which is at the distal end of the robot 101, to a desired position within a movable range of the robot 101, orient the holding device 10 in a desired direction, rotate the holding device 10, and open and close the pair of finger members 10A of the holding device 10.

Also, the robot controller 104 controls the camera 103 to acquire various pieces of information in addition to the above-described image and distance information from the camera 103. The information that the robot controller 104 acquires from the camera 103 includes a result of shape recognition of the workpieces W stored in the stocker 102 and a result of detection of the holding state of the workpiece W1 held by the robot 101.

A procedure of the handling work of the workpieces W (workpiece handling work) using the robot system 100 will be described below.

First, the robot controller 104 controls the camera 103 to perform shape recognition of the workpieces W. Specifically, the camera 103 captures an image of the workpieces W stored in the stocker 102, and performs shape recognition of the workpieces W stored in the stocker 102 based on the captured image. Then, the camera 103 transmits a result of the shape recognition to the robot controller 104.

The shape recognition of the workpieces W includes, for example, detecting a shape, an orientation, and a height of the plurality of workpieces W stored in the stocker 102 from the captured image and distance information; and, based on the detection result, selecting one or a plurality of candidates (candidate workpiece) to be held by the robot 101. In the case where a plurality of candidate workpieces are selected, it is possible to prioritize these candidates.

Next, the robot controller 104 controls the robot 101 to hold the workpiece W selected through the shape recognition. Specifically, the robot controller 104 controls the holding device 10 of the robot 101 to move to a position of the selected workpiece W. At the position, the robot controller 104 controls the pair of finger members 10A of the holding device 10 to open and close itself so as to hold (grip) the selected workpiece W.

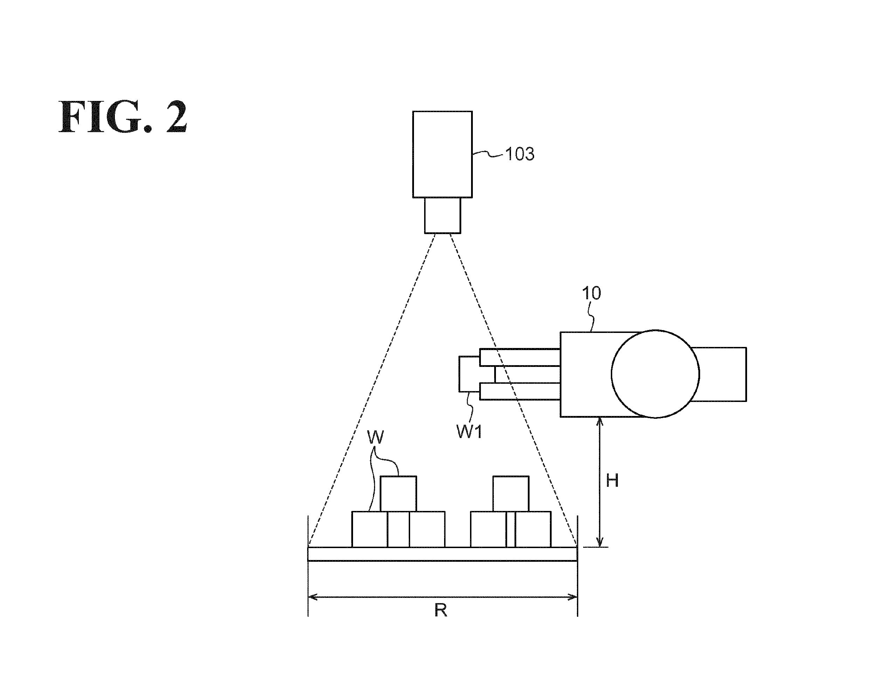

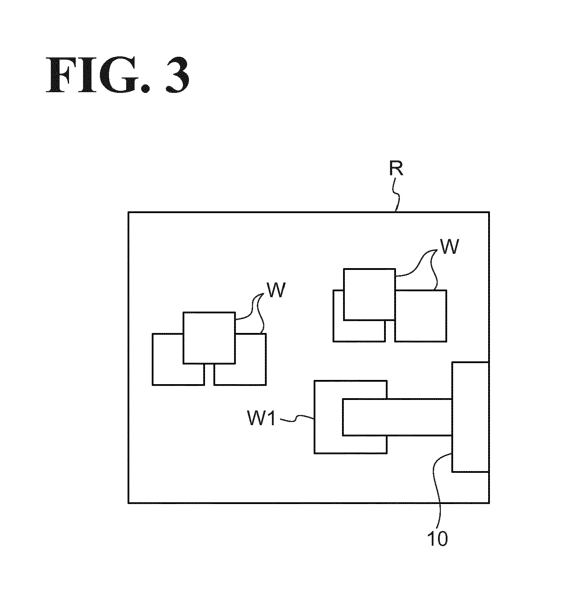

Next, as shown in FIG. 2, the robot controller 104 controls the robot 101 to transfer the workpiece W1 held by the holding device 10 to a predetermined height position H in the image capture area of the camera 103. After the transfer, the robot controller 104 controls the camera 103 to detect the holding state of the workpiece W1 held by the holding device 10. Specifically, as shown in FIG. 3, the camera 103 captures an image of the workpiece W1 positioned in the image capture area and detects the holding state of the workpiece W1 from the captured image. Then, the camera 103 transmits a detection result of the holding state to the robot controller 104. That is, the camera 103 and the image of the image capture area R used in the shape recognition of the workpieces W stored in the stocker 102 are also used in the detection of the holding state of the workpiece W1.

The detection of the holding state of the workpiece W1 is processing that includes detecting the state in which the workpiece W1 is being held by the holding device 10 from an image and distance information obtained by imaging. Examples to be detected include position and posture (inclination angle) of the held workpiece W1. As necessary, it is possible to determine acceptability of the holding state of the workpiece W1 based on the detected position and/or posture. In this case, the determination result of acceptability is included in the detection result of the holding state of the workpiece W1 transmitted from the camera 103 to the robot controller 104.

Then, the robot controller 104 controls the robot 101 to subject the workpiece W1 held by the holding device 10 to handling in the next step.

Examples of the handling in the next step include, but are not limited to, "step of placing the workpiece W1", "step of temporarily placing the workpiece W1 for re-recognition", and "step of excluding the workpiece W1".

In the step of placing the workpiece W1, the robot controller 104 controls the robot 101 to place the workpiece W1 onto a predetermined place other than in the stocker 102. Here, the robot controller 104 controls the robot 101 to correct (correct the position and/or correct the posture of) the workpiece W1 based on the holding state of the workpiece W1, and then to place the workpiece W1.

In the step of temporarily placing the workpiece W1 for re-recognition, the robot controller 104 controls the robot 101 to place a workpiece W1 determined as unacceptable on a predetermined temporary table, not shown. On the predetermined temporary table, the workpiece W1 is subjected to shape recognition again and re-held by the holding device 10.

In the step of excluding a workpiece W1 held (or re-held) by the holding device 10 when the workpiece W1 is determined as unacceptable, the robot controller 104 controls the robot 101 to place the workpiece W1 on a predetermined exclusion area, so as to exclude the workpiece W1.

As has been described hereinbefore, the robot system 100 includes the robot 101, the camera 103, and the robot controller 104. The robot 101 includes the holding device 10 to hold a workpieces W from among the plurality of workpieces W stored in the stocker 102. The camera 103 performs shape recognition of the workpieces W stored in the stocker 102 and detects the holding state of the workpiece W1 held by the robot 101. The robot controller 104 controls the robot 101 and the camera 103.

Then, the robot controller 104 controls the camera 103 to perform shape recognition of the workpieces W stored in the stocker 102. Based on the shape recognition of the workpieces W recognized by the camera 103, the robot controller 104 controls the robot 101 to hold one workpiece W from among the workpieces W. Then, the robot controller 104 controls the robot 101 to transfer the held workpiece W1 to a particular position H in the image capture area of the camera 103, and controls the camera 103 to detect the holding state of the workpiece W1. Based on the holding state detected by the camera 103, the robot controller 104 controls the robot 101 to subject the workpiece W1 to handling in the next step.

In the robot system 100, the robot controller 104 controls the camera 103 to perform shape recognition of the workpieces W stored in the stocker 102 and detect the holding state of the workpiece W1 held by the robot 101. This requires no or minimal transfer between the place of shape recognition of the workpieces and the place of detection of the holding state of the workpiece. This, in turn, minimizes the time necessary for the transfer, if any. In contrast, the conventional art provides the shape sensor and the holding state detection device separately, and thus necessitates some time to transfer the workpiece from the place of shape recognition of the workpiece to the place of detection of the holding state of the workpiece. The robot system 100 eliminates or minimizes the transfer time and thus saves the time for the workpiece handling work.

Similar advantageous effects are obtained in a method for producing a to-be-processed material when a workpiece W is obtained using the robot system 100 and a to-be-processed material is obtained using the workpiece W. The to-be-processed material may be any article obtained using a workpiece W transferred or processed, such as in a combining operation, by the robot system 1. The to-be-processed material may be the workpiece W itself. Examples of the to-be-processed material include parts such as bolts and assembled structures such as automobiles.

As described above, the handling in the next step may be correcting the holding state of the held workpiece W1 and placing the workpiece W1. This ensures accurate placement of the workpiece W1 without re-holding of the workpiece W1 even when the workpiece W1 is not held in a suitable manner. This, in turn, saves time as compared with the case of re-holding the workpiece W1 when the workpiece W1 is not held in a suitable manner. The correction may be at least one of correction of the position of the workpiece W1 and correction of the posture of the workpiece W1.

The robot system 100 may include a determinator 104A built in the robot controller 104. The determinator 104A determines a destination position to which the held workpiece W1 is transferred. The determinator 104A determines the destination position to which the workpiece W1 is to be transferred based on the image acquired during the shape recognition of the workpieces W stored in the stocker 102.

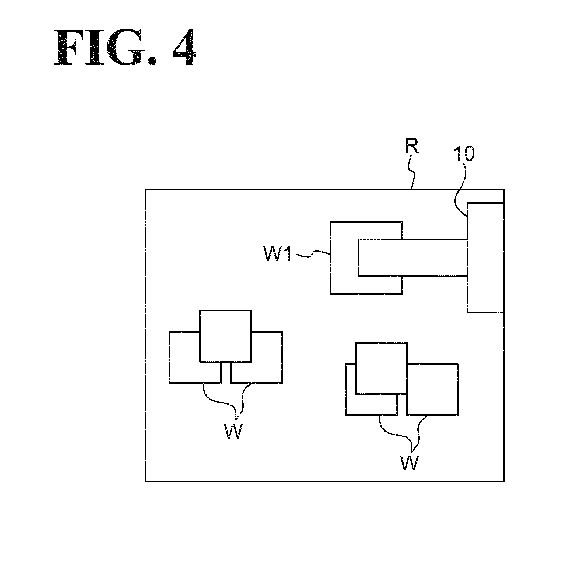

For example, the determinator 104A detects an area in which no workpieces W exist from the image acquired during the shape recognition of the workpieces W in the stocker 102 to determine a position within the area as the destination of the workpiece W1. This ensures that the workpiece W1 is transferred to an area in which no workpieces W exist. Transferring the workpiece W1 to an area in which no workpieces W exist eliminates or minimizes overlap of the held workpiece W1 with the workpieces W stored in the stocker 102 (eliminates or minimizes the situation in which the workpieces W are hidden from the camera 103). Thus, the workpiece W1 is prevented from interfering with the camera 103's shape recognition of the workpieces W. In the robot system 100, the determinator 104A may change the destination of the workpiece W1 with each cycle (that is, every time the holding state is confirmed). As a result, as shown in FIG. 4, the workpiece W1 is transferred to another destination position different from the position shown in FIG. 3.

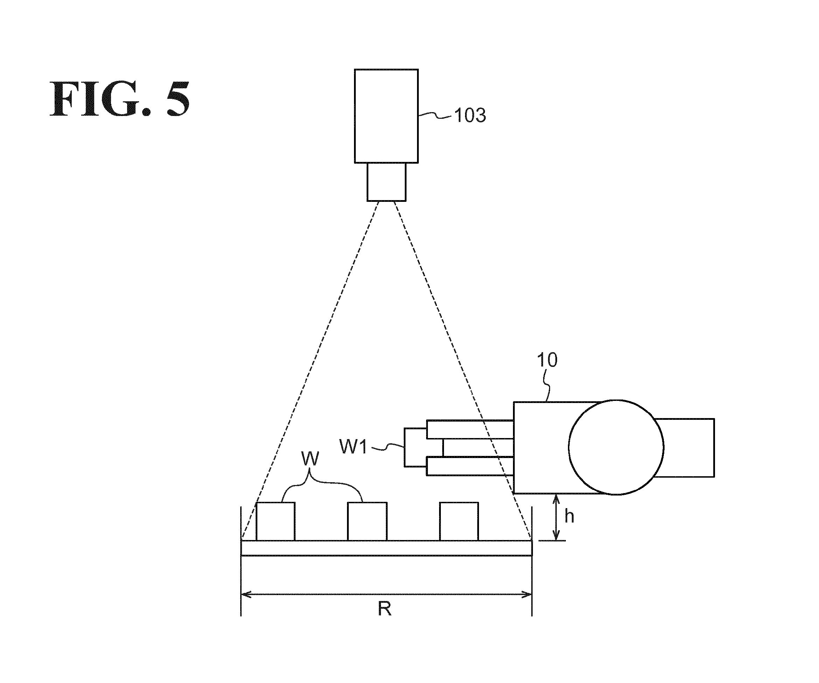

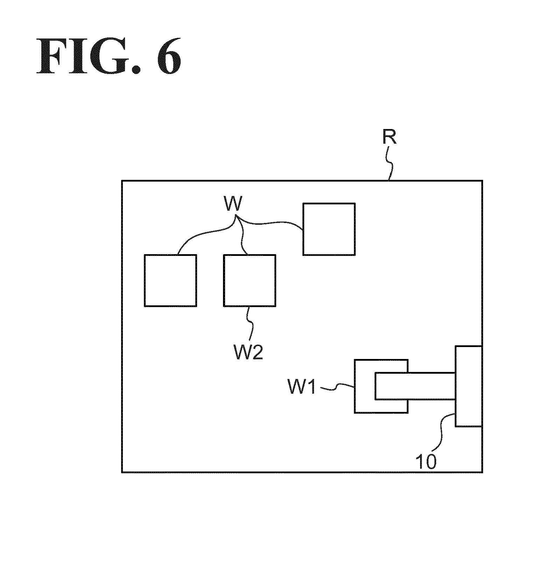

Also, the determinator 104A may detect a maximum height position of the workpieces W stored in the stocker 102 from the distance information acquired during the shape recognition of the workpieces W stored in the stocker 102. Then, the determinator 104A may determine a height position apart from the maximum height position by a predetermined distance as the destination of the workpiece W1. As shown in FIG. 5, when the number of workpieces W stored in the stocker 102 reduces and thus the maximum height position of the stack of the workpieces W reduces, then in accordance with the reduced maximum height position, the destination position of the holding device 10 can be set at a lower height position h (where h < H). Thus, when the height position of the holding device 10 reduces, the workpiece W1 is positioned farther away from the camera 103. This reduces the area occupancy of the workpiece W1 in the image capture area R of the camera 103 (that is, the workpiece W1 looks smaller), as shown in FIG. 6. As the workpiece W1 is transferred to the lower height position h, the held workpiece W1 becomes less likely to block the workpieces W stored in the stocker 102. This eliminates or minimizes the situation in which the workpiece W1 interferes with the camera 103 while the camera 103 is performing the shape recognition of the workpieces W.

When a candidate workpiece next to be held is determined during the shape recognition of the workpieces W, the determinator 104A may determine, as the destination of the workpiece W1, a position where the workpiece W1 does not block a candidate workpiece W2, as shown in FIG. 6. The candidate workpiece W2 may include a single candidate workpiece W2 or a plurality of candidate workpieces W2. If the workpiece W1 held in this manner does not overlap at least the candidate workpiece W2 among the plurality of workpieces W stored in the stocker 102, the subsequent shape recognition and workpiece holding are facilitated. This saves the time for the workpiece handling work.

The determinator 104A may not necessarily be built in the robot controller 104 but may be disposed separately from the robot controller 104.

Obviously, numerous modifications and variations of the present invention are possible in light of the above teachings. It is therefore to be understood that within the scope of the appended claims, the invention may be practiced otherwise than as specifically described herein.

For example, the camera 103 will not be limited to a three-dimensional camera; any other known two-dimensional cameras or three-dimensional sensors are possible insofar as the sensors are capable of performing shape recognition of the workpieces W in the stocker 102 and detecting the holding state of the workpiece W1 held by the robot 101. In the case of a two-dimensional camera, it is possible to rotate the holding device 10 so as to enable the two-dimensional camera to detect the holding state of the workpiece W1 three-dimensionally (sterically).

The holding device 10 may include, insofar as the holding device 10 is able to hold the workpiece W, a pair of fingers 10A, may include a finger swingable to grasp the workpiece W, or may use pneumatic or electromagnetic force to suck the workpiece W.
- 10: Holder
- 100: Robot system
- 101: Robot
- 102: Stocker
- 103: Sensor
- 104: Robot controller
- 104A: Determinator
- W, W1, W2: Workpiece

## Claims

1. A robot system (100), **characterized by** comprising:
a robot (101) including a holder (10) configured to hold a first workpiece from among a plurality of workpieces stored in a stocker (102);
a sensor (103) configured to perform shape recognition of the plurality of workpieces stored in the stocker (102) and configured to detect a holding state of the first workpiece held by the robot (101); and
a controller (104) configured to control the sensor (103) to perform the shape recognition of the plurality of workpieces stored in the stocker (102), configured to control the robot (101) to hold the first workpiece based on the shape recognition performed by the sensor (103) and to transfer the first workpiece to a particular position in a sensor area of the sensor (103), configured to control the sensor (103) to detect the holding state of the first workpiece held by the robot (101), and configured to control the robot (101) to place the first workpiece at a predetermined position or in a predetermined posture based on the holding state detected by the sensor (103).

2. The robot system (100) according to claim 1, wherein the controller (104) is configured to, as a handling operation, correct at least one of a position and a posture of the first workpiece and place the corrected first workpiece.

3. The robot system (100) according to claim 1 or 2, further comprising a determinator (104A) configured to determine the particular position in the sensor area of the sensor (103) as a destination position of the first workpiece held and transferred by the robot (101).

4. The robot system 100 according to claim 3, wherein the determinator (104A) is configured to determine the destination position as a position where the first workpiece held by the robot (101) does not overlap a candidate workpiece next to be held from the stocker (102).

5. The robot system (100) according to claim 3, wherein the determinator (104A) is configured to determine the destination position in accordance with a maximum height position of the plurality of workpieces stored in the stocker (102).

6. A method for producing a to-be-processed material, **characterized by** obtaining a to-be-processed material using a workpiece obtained using the robot system (100) according to any one of claims 1 to 5.
